# EUROPEAN PATENT SPECIFICATION

(11) **EP 1 661 739 B1**
(45) Date of publication and mention of the grant of the patent: **11.05.2011**
(21) Application number: 04380239.6
(22) Date of filing: 26.11.2004
(51) Int. Cl.: B60G 11/46, B62D 61/12

(54) **Device for lifting an air suspended axle**
Achslift für luftgefederte Fahrzeugachsen
Système de relevage d'axe de véhicule à suspension pneumatique

(43) Date of publication of application: 31.05.2006
(73) Proprietor: Losada Alvarez, Agueda, 50003 Zaragoza (ES)
(72) Inventor: Losada Alvarez, Agueda, 50003 Zaragoza (ES)
(74) Representative: PROPI, S.L.

(56) References cited:
- EP-A- 0 836 984
- EP-A- 0 941 915
- EP-A- 1 016 584
- EP-A- 1 332 953

## Description

### OBJECT OF THE INVENTION

The present invention refers to a spacing arm which has been especially designed for its incorporation in devices intended for lifting a rolling axle of an industrial vehicle, trailer or semi-trailer, in those cases in which they are multi-axle vehicles, by means of which it is achieved that the wheels of a certain axle are kept lifted with regard to the ground when their participation is not needed.

The object of the invention is to achieve greater stability and safety of the lifting device, since the number of parts necessary for achieving the lift of a certain axle is reduced, with the subsequent cost reduction due to the savings of material and time necessary for the assembly thereof, which is much simpler, a correct centering of the assembly and, therefore, the required alignment of the axle, being ensured, while in turn increasing the versatility of the lifting device, given that by means of the spacing arm proposed by the invention, the device can be assembled in supports of the pneumatic suspension of the vehicle of different dimensions without needing to arrange guiding parts, such as connecting rods and yokes, for example, adapted to the dimensions of each support.

### BACKGROUND OF THE INVENTION

There are currently several devices for achieving the lifting of rolling axles of industrial vehicles, trailers and semi-trailers, by means of which the maneuvers of turning the vehicle are facilitated and the unnecessary wear of the wheels corresponding to a certain axle are prevented, by means of its lifting, for example when said vehicle is in loaded conditions which allow doing so, such that said lifting device can adopt two working positions, one in which the wheels corresponding to the axle are supported on the ground, and the other one in which the axle is lifted such that the wheels are not in contact with the ground, therefore being inoperative.

One of these lifting devices is defined in Utility Model application with publication number ES 1 051 061 U, the owner of which is the same applicant of the present invention, which consists of two symmetrical, flat, L-shaped side parts which are joined when laterally coupled to the support of the leaf spring arm, by means of the articulated joining to the ends of the bolt linking the support with the leaf spring arm, by means of respective bushings, assembled on which are, in turn, respective connecting rods which are joined in an integral manner to a U-shaped yoke, acting on the lower area of which there is a bellows, rubber or membrane, in turn joined to the side plates, the U-shaped yoke incorporating a roller assembled with rotational freedom constituting the rolling support acting at the lower portion of the leaf spring arm, the symmetrical side parts being immobilized by means of the arrangement of a spacer joined thereto in their rear area, which acts as a stop in the lower area of the support of the pneumatic suspension, the lifting of the yoke, and therefore of the leaf spring arm, thus occurring when the pneumatic bellows is actuated.

This device has a series of drawbacks, due to the fact that it needs a pair of connecting rods articulated on the bushings arranged at the ends of the bolt linking the support to the articulated arm to achieve a correct guiding in the lifting of the U-shaped yoke, three parts, the pair of connecting rods and the yoke, are therefore necessary for achieving said guiding, producing certain instability as well as difficulties in centering and screwing down thereof given the need to join three independent parts, furthermore, the device is not versatile given that according to the dimensions of the support, different yokes adapted to the dimensions of the support are necessary for certain connecting rods, and vice versa, which implies the necessity of arranging connecting rods, yokes and support rollers of the leaf spring arm of different dimensions for the assembly of the device in the supports of different sizes existing on the market, in addition to complicating and increasing the cost of the assembly due to the necessity of carrying out the fixing of the connecting rods and the yoke after assembling the lift on the support.

On the other hand, European patent application with publication number EP 1 332 953, the owner of which is also the same applicant of the present invention, discloses a device of the previously mentioned type, consisting of flat, L-shaped side plates with slotted holes for housing the bolt, these plates being joined at their lower area, rather than being independent, the part acting as a spacer and a stop being materialized in the lower area of the support, in a tube adjustably joined to both plates at its inner side, the same connecting rods, yokes and roller as in the previously set forth spacer being necessary, and therefore involving the same drawbacks.

EP 0 836 984 discloses a spacing arm having a U-shaped but made in two parts.

### DESCRIPTION OF THE INVENTION

The spacing arm for a lift of a rolling axle of industrial vehicles, trailers and semi-trailers proposed by the invention constitutes an advance in the devices of this type used up until now, and fully solves in a satisfactory manner the drawbacks set forth above in the sense of reducing the number of parts necessary for achieving the lifting of the leaf spring arm, the previously necessary connecting rods and yoke being configured in a single part, implying a reduction of material and of assembly time, with the subsequent reduction of costs, the stability and centering of the assembly, and therefor the safety thereof, being significantly improved, as it is not necessary to join independent parts, constituting a highly versatile device enabling its assembly on supports of the pneumatic suspension of the vehicle of different dimensions without needing to have connecting rods, yokes and rollers of different measurements in stock, enabling the entire assembly of the device, with the exception of the flat, L-shaped side parts, to be able to be assembled in the factory, which simplifies this operation, being carried out more safely.

The spacing arm for a lift of a rolling axle of industrial vehicles, trailers and semi-trailers object of the invention is based on the replacement of the connection rods and yoke forming part of the lifts currently used with a single part which is the spacing arm, which has two areas divided by a bending line, the area intended for being fixed to the bellows, rubber or membrane having a U-shaped configuration, given the duly carried out orthogonal bending operations, being fixed to said bellows by means of screws through guides adjustably arranged for that purpose, respective holes being arranged in the sides of the U-shaped area for the arrangement of a freely-rotating roller on which the leaf spring arm of the axle to be lifted is supported, the spacing arm having, in the area opposite to the previously described one, guides for the adjustable fixing to a bar having a semi-cylindrical-shaped central area, intended for housing and guiding, together with the spacing arm, a part carrying out the function of a spacer and constituting the rotating shaft with regard to which the spacing arm rotates to produce the lifting of the leaf spring arm.

This spacer has a cylindrical-shaped central area housed in the bar, to enable the rotation of the spacing arm, and two quadrangular-shaped end areas of dimensions exceeding that of the central area for the purpose of enabling the rotation thereof, which are supported in the support of the pneumatic suspension, acting as a stop of the lifting device, the spacer having respective threaded holes at its ends for its fixing to the flat, L-shaped side parts constituting the casing of the lifting device, both in the case that the latter has a single-part configuration and in the case that it is materialized in two independent parts.

In a variant of the device set forth above, the possibility that the spacing arm incorporates holes rather than guides for its fixing both to the bellows, rubber or membrane and to the bar for housing and guiding the spacer, is contemplated.

It is necessary to indicate that the bending angle by means of which two areas in the spacing arm are differentiated is determined according to the geometry of the assembly of the lifting device, usually being 125°, possibly being any other angle, it can even have a flat configuration, with no bend whatsoever, as the case may be.

The possibility of materializing the spacing arm in two parts is also contemplated for the purpose of using the U-shaped yokes existing on the market, both parts being fixed by conventional means, such as screws, said fixing between both parts being able to be carried out at the fixing area of the bellows, rubber or membrane, or else in the area close to the roller on which the leaf spring arm of the axle to be lifted is supported, providing in this case, in the end area for fixing the longitudinal section of the spacing arm to the yoke, lugs incorporating holes for their fixing, by conventional means, to the U-shaped yoke itself, the straight area of the longitudinal section of the spacing arm being longer than in the previous variant, the bending line of this part being close to said lugs.

On the other hand, both in the case that the spacing arm is materialized in a single part and in the case that it consists of two independent parts, the possibility of providing the longitudinal section of the spacing arm, in the area corresponding to the bending line, perpendicularly thereto, and being extended to the transverse section thereof, with a semi-cylindrical-shaped reinforcing rib made, for example, by means of deep drawing, is contemplated, for the purpose of providing said element with greater rigidity to increase its safety in those cases in which its working conditions require high stresses.

Another practical embodiment variant of the invention, contemplates the possibility, both in the case that the spacing arm is materialized in a single part and in the case that it consists of two independent parts, that the free ends of the U-shaped transverse section thereof, or the independent yoke constituting this part, extend above the leaf spring arm, a safety spacer being internally arranged between both ends, situated above the leaf spring arm and parallelly to the roller on which the leaf spring arm is supported, fixed by conventional means through the corresponding holes, covered with an elastic, rubber-type material, for the purpose of increasing the safety of the device and eliminating noises in the sense that if the lifting device were to be released from its fixings, it is held from the safety spacer by means of its support on the leaf spring arm, not falling to the ground, this support also occurring in the case that the lifting device does not act, i.e. with the bellows in an inoperative condition, minimizing the noises given the support of the rubber-type elastic material surface of the safety spacer in the leaf spring arm.

As mentioned, the fixing between the bar for housing and guiding the spacer and the spacing arm is preferably carried out by means of screws, although the possibility of using any other fixing means, such as rivets, welding or the configuration of a ring on an extension of the end of the spacing arm by means of which it is fixed to the spacer, such that the first one rotates with regard to the second one, without needing to provide the bar for housing and guiding the spacer, is contemplated.

In those cases in which the support of the pneumatic suspension is in contact with the spacer only at the ends thereof, the possibility of the spacer having a quadrangular-shaped configuration along its entire length is contemplated. In any case, the possibility of the spacer having any shape, such as quadrangular, circular, single-section, multi-section, solid or hollow, for example, is also contemplated, as long as it carries out the functions of being supported in the support of the pneumatic suspension and enables the rotation of the spacing arm.

Lastly, for the purpose of using the quadrangular-shaped spacers currently on the market or in stock, for any support condition thereof in the support, whether it is only at their ends or along the entire length thereof, the possibility of arranging a U-shaped flap in the spacer on any side other than the one supported in the support, by any fixing, screwing or welding means, is contemplated, such that a ring is configured at the end of the spacing arm, which ring contains a rotating shaft arranged within the U-shaped flap, thus enabling the rotation of the spacing arm with regard to the spacer, without needing to arrange a bar for housing and guiding the spacer.

### DESCRIPTION OF THE DRAWINGS

To complement the description being made and for the purpose of aiding to better understand the features of the invention, according to a preferred practical embodiment thereof, a set of drawings is attached as an integral part of said description, in which the following has been depicted with an illustrative and non-limiting character:
Figure 1 shows a side elevational view of a lifting device incorporating the spacing arm object of the invention.
Figure 2 shows a plan view of the development of the spacing arm in two dimensions, prior to carrying out the bending operations, and a side elevational view thereof, once said operations have been carried out.
Figure 3 shows a plan view and elevational view of the bar for housing and guiding the spacer.
Figure 4 shows an elevational view and profile view of the spacer.
Figure 5 shows three side elevational views and a frontal view of a practical embodiment variant of the spacing arm, in which a U-shaped flap is arranged in the spacer on any side other than the one supported in the support, a ring being configured on the end of the spacing arm, containing a rotating shaft arranged within the U-shaped flap.
Figure 6 shows a plan view and an elevational view of a practical embodiment variant of the spacing arm, in which the latter is materialized in two independent parts, a reinforcing rib being seen in the longitudinal section thereof.
Figure 7 shows an elevational view of a practical embodiment variant of the spacing arm, consisting of a safety spacer arranged above the leaf spring arm in an extension of the U-shaped transverse section of the spacing arm.
Figure 8 shows a plan view and an elevational view of a practical embodiment variant of the spacing arm, in which the latter is materialized in two independent parts, the longitudinal section incorporating lugs for its fixing to the yoke in an area close to the support roller of the leaf spring arm.

### PREFERRED EMBODIMENT OF THE INVENTION

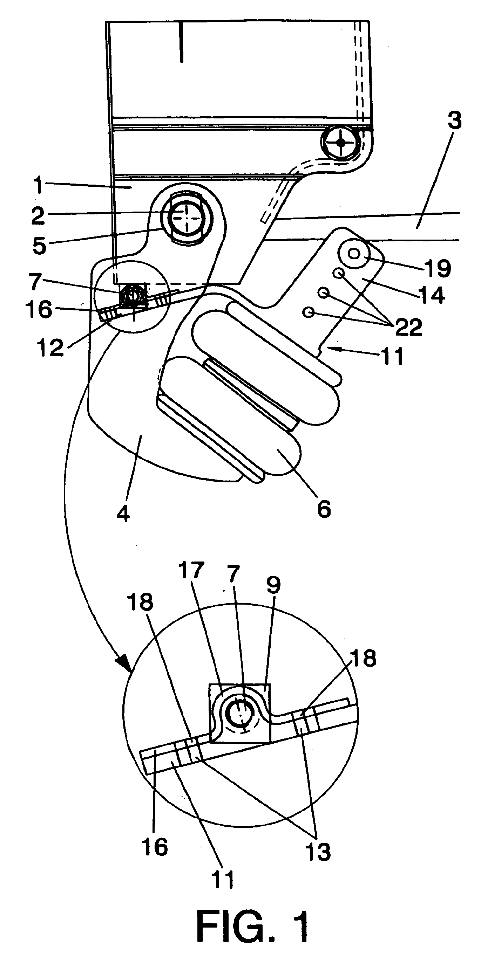

In view of the indicated figures, particularly Figure 1, it can be observed how the spacing arm for a lift of a rolling axle of industrial vehicles, trailers and semi-trailers object of the invention is arranged on a support (1) of the pneumatic suspension which is joined in an articulated manner to the end of a leaf spring arm (3) by means of a transverse bolt (2), constituting the support means for the rolling axle of an industrial vehicle, trailer or semi-trailer which is to be lifted, together with the arrangement of another support (1) on the opposite side of the vehicle.

The lifting device consists of a pair of flat, L-shaped side parts (4), which can be independent or of a single-part configuration, incorporating a circular hole (5) in their upper end which is coupled to the transverse bolt (2), a bellows (6), rubber or membrane being fixed and supported at its lower free end which, upon receiving pressure, actuates the lifting device, producing the lifting of the leaf spring arm (3) and, therefore, of the corresponding axle.

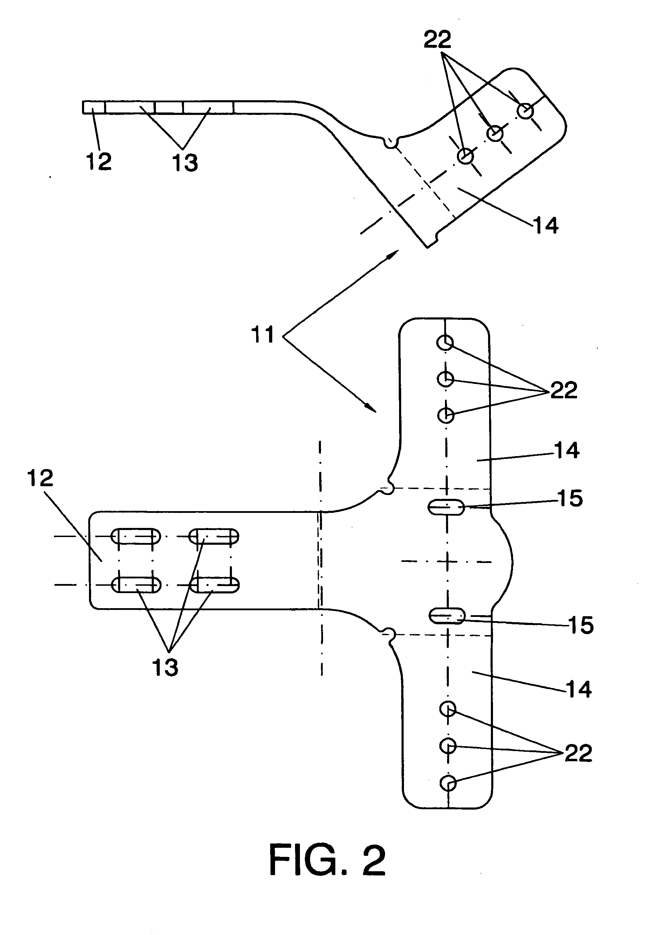

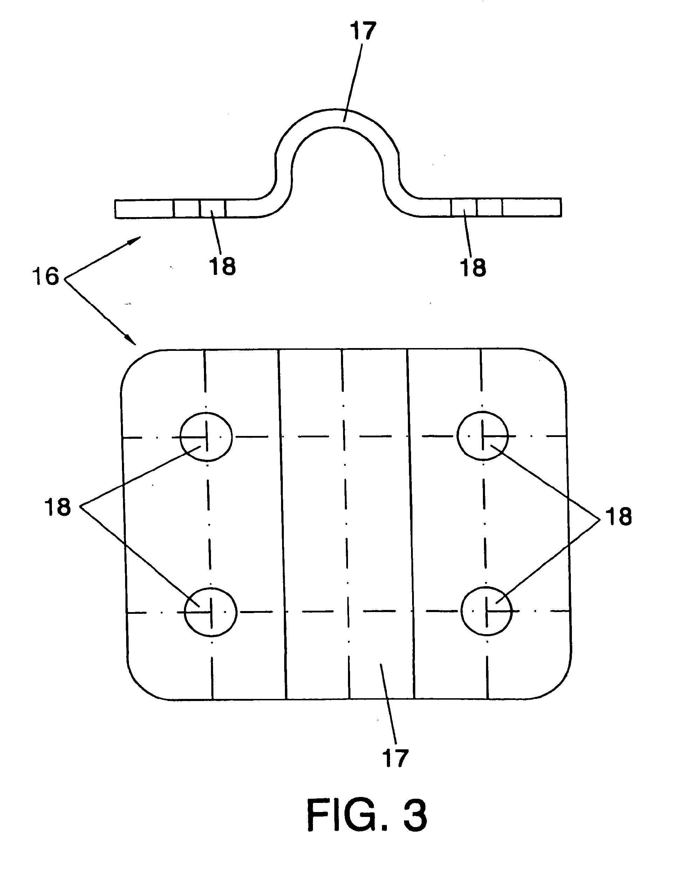

The object of the invention is based on the arrangement of a spacing arm (11), as shown in Figure 2, having two sections (12) and (14) divided by a bending line, having a U-shaped transverse section (14) in the area intended for being fixed to the bellow (6), rubber or membrane, given the duly carried out orthogonal bending operations, being fixed to said bellows (6) by means of screws through respective guides (15) adjustably established for that purpose, respective holes (22) being arranged on the sides of the U-shaped transverse section (14) for the arrangement of a cylindrical-shaped freely rotating roller (19) on which the leaf spring arm (3) of the axle to be lifted is supported, the spacing arm (11) having, in the area opposite to the one previously described, a longitudinal section (12) with guides (13) for the adjustable fixing to a bar (16) by means of holes (18) arranged in the latter, as can be seen in Figure 3, having a semi-cylindrical-shaped central area (17) intended for housing and guiding, along with the spacing arm (11), a spacer (7) constituting the rotating shaft with regard to which the spacing arm (11) rotates in order to cause the lifting of the leaf spring arm (3).

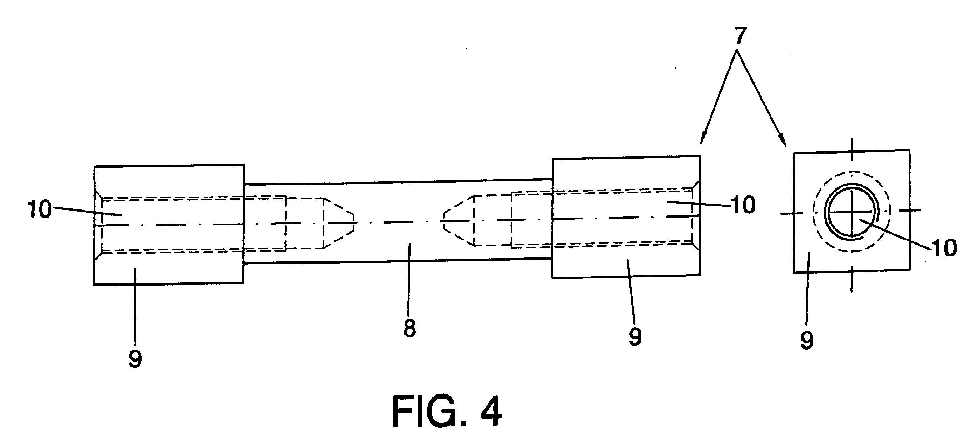

The spacer (7), depicted in Figure 4, has a cylindrical-shaped central area (8) which is housed in the bar (16) for the housing and guiding thereof to enable the rotation of the spacing arm (11), and two quadrangular-shaped end areas (9) of dimensions exceeding that of the central area (8) for the purpose of enabling the rotation thereof, which are supported in the support (1) of the pneumatic suspension, acting as a stop for the lifting device, the spacer (7) having respective threaded holes (10) at its ends for its internal fixing to the flat, L-shaped side parts (4) constituting the casing of the lifting device, both in the case that the latter has a single-part configuration and in the case that it is materialized in two independent parts.

In a variant of the spacing arm (11) set forth above, the possibility of arranging holes rather than guides (13) and (15) for its fixing both to the bellows (6), rubber or membrane and to the bar (16) for housing and guiding the spacer (7), is contemplated.

It is necessary to indicate that the bending angle by means of which two sections (12) and (14) of the spacing arm (11) are differentiated is determined according to the geometry of the assembly of the lifting device, usually being 125°, possibly being any other angle, it can even have a flat configuration, with no bend whatsoever, as the case may be.

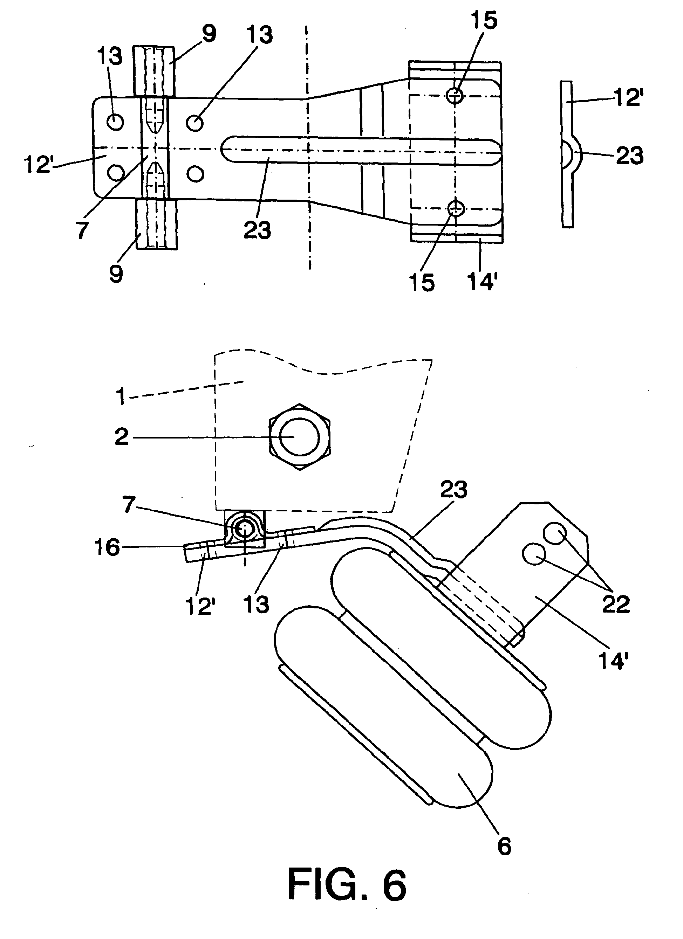

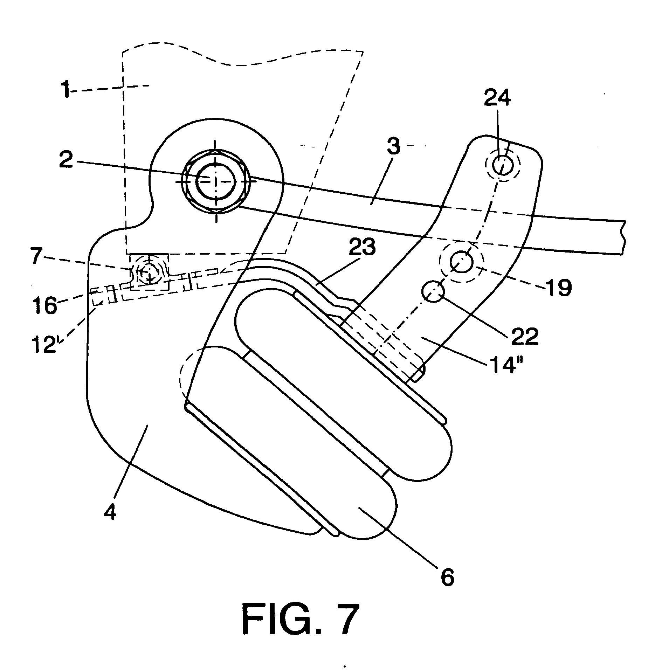

The possibility of materializing the spacing arm (11) in two independent parts is also contemplated, as can be seen in Figures 6 or 7, for the purpose of using the U-shaped yokes existing on the market, having a longitudinal section (12') fixed to a U-shaped transverse section (14'), in the manner of a yoke, both parts being fixed by conventional means, such as screws, at the fixing area of the bellows, (6) rubber or membrane.

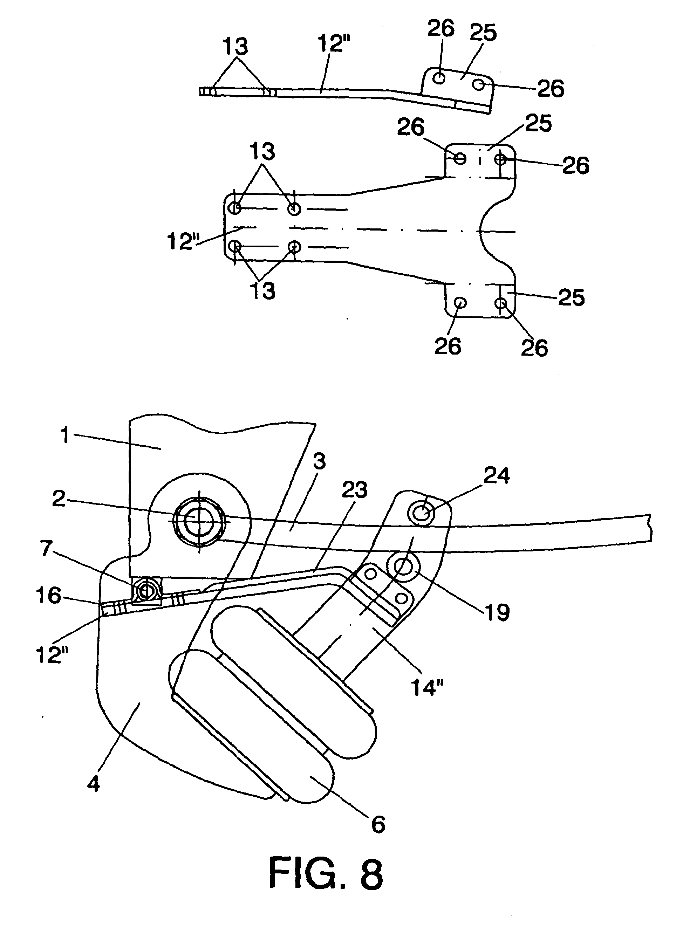

According to the foregoing, the possibility of the spacing arm (11) consisting of a longitudinal section (12"), as shown in Figure 8, which is fixed to the U-shaped transverse section (14'), in the manner of a yoke, in the area close to the roller (19) on which the leaf spring arm (3) of the axle to be lifted is supported, is contemplated, there being arranged in this case, in the end area for fixing the longitudinal section (12") of the spacing arm (11) to the U-shaped transverse section (14'), lugs (25) incorporating holes (26) for their fixing, by conventional means, to the U-shaped transverse section (14') itself, the straight area of said longitudinal section (12") being longer than in the case of longitudinal section (12), (12'), the bending line of this part being close to said lugs (25).

On the other hand, both in the case that the spacing arm (11) is materialized in a single part and in the case that it consists of two independent parts (12'), (12") and (14'), the possibility of providing the longitudinal section (12), (12'), (12") of the spacing arm (11), in the area corresponding to the bending line, perpendicularly thereto, and being extended to the transverse section (14), (14') thereof, with a semi-cylindrical-shaped reinforcing rib (23) made, for example, by means of deep drawing, as can be seen in Figures 6, 7 and 8, is contemplated, for the purpose of providing said element with greater rigidity to increase its safety in those cases in which its working conditions require high stresses.

Another practical embodiment variant of the invention, contemplates the possibility, both in the case that the spacing arm (11) is materialized in a single part and in the case that it consists of two independent parts (12'), (12") and (14'), that the free ends of the U-shaped transverse section (14), (14') thereof extend above the leaf spring arm (3), as can be seen in Figures 7 and 8, constituting a transverse section (14"), a safety spacer (24) being internally arranged between both ends, situated above the leaf spring arm (3) and parallelly to the roller (19) on which the leaf spring arm (3) is supported, fixed by conventional means through the corresponding holes (22), covered with an elastic, rubber-type material, for the purpose of increasing the safety of the device and eliminating noises in the sense that if the lifting device were to be released from its fixings, it is held from the safety spacer (24) by means of its support on the leaf spring arm (3), not falling to the ground, this support also occurring in the case that the lifting device does not act, i.e. with the bellows (6) in an inoperative condition, minimizing the noises given the support of the rubber-type elastic material surface of the safety spacer (24) in the leaf spring arm (3).

As mentioned, the fixing between the bar (16) for housing and guiding the spacer (7) and the spacing arm (11) is preferably carried out by means of screws, although the possibility of using any other fixing means, such as rivets, welding or the configuration of a ring on an extension of the end of the spacing arm (11) by means of which it is fixed to the spacer, such that the first one rotates with regard to the second one, without needing to provide the bar (16) for housing and guiding the spacer (7), is contemplated.

In those cases in which the support (1) of the pneumatic suspension is in contact with the spacer (7) only at the end areas (9) thereof, the possibility of the spacer (7) having a quadrangular-shaped configuration along its entire length is contemplated. In any case, the possibility of the spacer (7) having any shape, such as quadrangular, circular, single-section, multi-section, solid or hollow, for example, is also contemplated, as long as it carries out the functions of being supported on the support (1) of the pneumatic suspension and enables the rotation of the spacing arm (11).

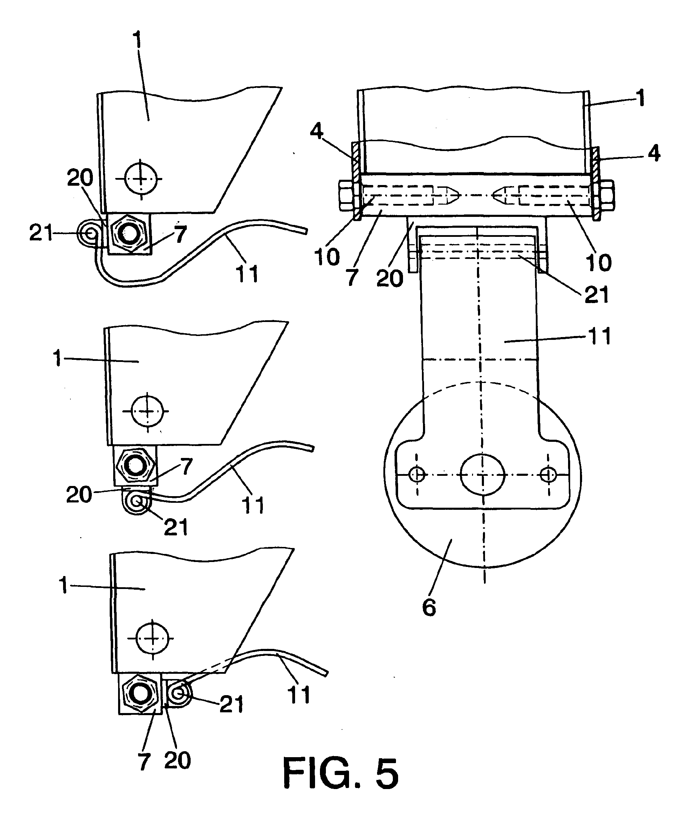

Lastly, for the purpose of using the quadrangular-shaped spacers (7) currently on the market or in stock, for any support condition thereof in the support (1), whether it is only at the end areas (9) or along the entire length thereof, the possibility of arranging a U-shaped flap (20) in the spacer (7) on any side other than the one supported in the support (1), by any fixing, screwing or welding means, as can be seen in Figure 5, is contemplated, such that a ring is configured on the end of the spacing arm (11), which ring contains a rotating shaft (21) arranged within the U-shaped flap (20), thus enabling the rotation of the spacing arm (11) with regard to the spacer (7), without needing to arrange a bar (16) for housing and guiding the spacer (7).

## Claims

1. A spacing arm for a lift of a rolling axle of industrial vehicles, trailers and semi-trailers, the purpose of which is the installation thereof in devices of the type consisting of a pair of flat, L-shaped side parts (4) assembled on the articulated transverse connecting bolt (2) between the support (1) of the pneumatic suspension and the leaf spring arm (3), fixing a bellows (6), rubber or membrane actuating the lifting device on the lower free branch of the side parts (4), **characterized in that** it is constituted of a spacing arm (11) having a U-shaped transverse section (14) fixed to the bellows (6) through guides (15) arranged for that purpose, respective holes (22) being arranged in the sides of the transverse section (14) for the arrangement of a known roller (19) on which the leaf spring arm (3) is supported, having in the opposite area, divided by a bending line, a longitudinal section (12) with guides (13) for the fixing to a bar (16) by means of holes (18) arranged in the latter, which has a semi-cylindrical-shaped central area (17) for the housing and guiding of a spacer (7), which has a cylindrical-shaped central area (8) which is housed in the bar (16), and two quadrangular-shaped end areas (9), of dimensions exceeding that of the central area (8), which are supported in the support (1) of the pneumatic suspension, having respective threaded holes (10) in its side ends for its internal fixing to the side parts (4).

2. A spacing arm for a lift of a rolling axle of industrial vehicles, trailers and semi-trailers according to claim 1, **characterized in that** the spacing arm (11) has holes replacing the guides (13) and (15).

3. A spacing arm for a lift of a rolling axle of industrial vehicles, trailers and semi-trailers according to any of the previous claims, **characterized in that** the bending angle between the longitudinal section (12) and the transverse section (14) of the spacing arm (11) has any value, even having a flat configuration, being, determined by the geometry of the assembly of the lifting device.

4. A spacing arm for a lift of a rolling axle of industrial vehicles, trailers and semi-trailers according to any of the previous claims, **characterized in that** the spacing arm (11) is materialized in two independent parts, having a longitudinal section (12') fixed to a U-shaped transverse section (14'), in the way of a yoke, both parts being fixed by conventional means, such as screws, at the fixing area of the bellows (6), rubber or membrane.

5. A spacing arm for a lift of a rolling axle of industrial vehicles, trailers and semi-trailers according to any of claims 1 to 3, **characterized in that** the spacing arm (11) consists of a longitudinal section (12") which is fixed to the U-shaped transverse section (14') in the area close to the roller (19), there being arranged in the end area for fixing of the longitudinal section (12") to the U-shaped transverse section (14'), lugs (25) incorporating holes (26) for their fixing, by conventional means, to the transverse section (14') itself, the bending line of this part being close to said lugs (25).

6. A spacing arm for a lift of a rolling axle of industrial vehicles, trailers and semi-trailers according to the previous claims, **characterized in that** the longitudinal section (12), (12'), (12") of the spacing arm (11) consists of a semi-cylindrical-shaped reinforcing rib (23) in the area corresponding to the bending line, perpendicularly thereto, and being extended to the transverse section (14), (14').

7. A spacing arm for a lift of a rolling axle of industrial vehicles, trailers and semi-trailers according to the previous claims, **characterized in that** the free ends of the U-shaped transverse section (14), (14') of the spacing arm (11) extend above the leaf spring arm (3), constituting a transverse section (14"), a safety spacer (24) being internally arranged between both ends, situated above the leaf spring arm (3) and parallelly to the roller (19) on which the leaf spring arm (3) is supported, fixed by conventional means through the corresponding holes (22), covered with a rubber-type elastic material.

8. A spacing arm for a lift of a rolling axle of industrial vehicles, trailers and semi-trailers according to any of the previous claims, **characterized in that** the fixing between the bar (16) for housing and guiding the spacer (7) and the spacing arm (11) is carried out by any fixing means, such as rivets or welding.

9. A spacing arm for a lift of a rolling axle of industrial vehicles, trailers and semi-trailers according to any of the previous claims, **characterized in that** in those cases in which the support (1) of the pneumatic suspension is in contact with the spacer (7) only in the end areas (9) thereof, the possibility of the spacer (7) having any configuration along its entire length, such as quadrangular, circular or multi-section, is contemplated, as long as it is supported in the support (1) of the pneumatic suspension and enables the rotation of the spacing arm (11).

10. A spacing arm for a lift of a rolling axle of industrial vehicles, trailers and semi-trailers according to claim 9, **characterized in that** in the case that the spacer (7) has a quadrangular configuration, for any support condition thereof in the support (1), whether it is only at the end areas (9) or along the entire length thereof, a U-shaped flap (20) is arranged in the spacer (7) on any side other than the one supported in the support (1), by any fixing, screwing or welding means, such that a ring is configured on the end of the spacing arm (11), which ring contains a rotating shaft (21) arranged within the U-shaped flap (20), thus enabling the rotation of the spacing arm (11) with regard to the spacer (7).

## Patentansprüche

1. Ein Abstandsarm für die Anhebung einer Rollachse von Nutzfahrzeugen, Anhängern und Sattelanhängern, deren Zweck es ist, diese in Vorrichtungen von der Art zu installieren, die aus einem Paar flacher, L-förmiger Seitenteile (4) bestehen, die auf dem schwenkbar angeordneten Verbindungsquerbolzen (2) zwischen dem Träger (1) der Luftfederung und dem Blattfederarm (3) montiert sind, wobei ein Faltenbalg (6), Gummi oder eine Membran zum Antrieb der Hebevorrichtung auf der unteren, freien Abzweigung der Seitenteile (4) befestigt ist, **dadurch gekennzeichnet, dass** diese aus einem Abstandsarm (11) gebildet wird, der einen U-förmigen Querabschnitt (14) besitzt, der über zu diesem Zweck angeordneten Führungen (15) mit dem Faltenbalg (6) befestigt ist, wobei in den Seiten des Querabschnitts (14) entsprechende Bohrungen (22) zur Anordnung einer bekannten Rolle (19) angeordnet sind, auf der sich der Blattfederarm (3) abstützt, wobei sich in dem gegenüberliegenden, durch eine Biegelinie getrennten Bereich ein Längsabschnitt (12) mit Führungen (13) zur Befestigung an einer Stange (16) mittels an der letzteren angeordneten Bohrungen (18) befindet, der einen halb-zylinderförmig geformten zentralen Bereich (17) für die Aufnahme und Führung eines Abstandhalters (7) besitzt, der über einen zylinderförmigen, zentralen, in der Stange (16) aufgenommenen Bereich (8) und zwei viereckig geformte Endbereiche (9) mit Abmessungen verfügt, welche die des zentralen Bereichs (8) überschreiten, die in dem Träger (1) der Luftfederung abgestützt sind, wobei diese an den Seitenenden entsprechende Gewindebohrungen (10) zur internen Befestigung an den Seitenteilen (4) besitzen.

2. Ein Abstandsarm für die Anhebung einer Rollachse von Nutzfahrzeugen, Anhängern und Sattelanhängern nach Anspruch 1, **dadurch gekennzeichnet, dass** der Abstandsarm (11) Bohrungen besitzt, welche die Führungen (13) und (15) ersetzen.

3. Ein Abstandsarm für die Anhebung einer Rollachse von Nutzfahrzeugen, Anhängern und Sattelanhängern nach irgendeinem der vorherigen Ansprüche, **dadurch gekennzeichnet, dass** der Biegewinkel zwischen dem Längsabschnitt (12) und dem Querabschnitt (14) des Abstandsarms (11) jeden Wert und sogar eine flache Ausführung besitzen kann, wobei diese von der Geometrie des Aufbaus der Hebevorrichtung bestimmt wird.

4. Ein Abstandsarm für die Anhebung einer Rollachse von Nutzfahrzeugen, Anhängern und Sattelanhängern nach irgendeinem der vorherigen Ansprüche, **dadurch gekennzeichnet, dass** der Abstandsarm (11) in zwei unabhängigen Teilen verwirklicht ist, wobei diese einen Längsabschnitt (12') besitzen, der in der Art einer Gabel an einem U-förmigen Querabschnitt (14') befestigt ist, wobei beide Teile mit herkömmlichen Mitteln wie Schrauben an dem Befestigungsbereich des Faltenbalgs (6), Gummis oder der Membran befestigt sind.

5. Ein Abstandsarm für die Anhebung einer Rollachse von Nutzfahrzeugen, Anhängern und Sattelanhängern nach irgendeinem der Ansprüche 1 bis 3, **dadurch gekennzeichnet, dass** der Abstandsarm (11) aus einem Längsabschnitt (12") besteht, die an dem U-förmigen Querabschnitt (14') in dem Bereich in der Nähe der Rolle (19) befestigt ist, wobei in dem Endbereich zur Befestigung des Längsabschnitts (12") an dem U-förmigen Querabschnitt (14') Ösen (25) angeordnet sind, die Bohrungen (26) für deren Befestigung mit herkömmlichen Mitteln an dem Querabschnitt (14') selbst einschließen, wobei die Biegelinie dieses Teils nahe der besagten Ösen (25) liegt.

6. Ein Abstandsarm für die Anhebung einer Rollachse von Nutzfahrzeugen, Anhängern und Sattelanhängern nach den vorherigen Ansprüchen, **dadurch gekennzeichnet, dass** der Längsabschnitt (12), (12'), (12") des Abstandsarms (11) aus einer halb-zylinderförmigen Verstärkungsrippe (23) in dem Bereich besteht, welcher der Biegelinie entspricht, wobei diese gegenüber dieser senkrecht verläuft und zu dem Querabschnitt (14), (14') verlängert ist.

7. Ein Abstandsarm für die Anhebung einer Rollachse von Nutzfahrzeugen, Anhängern und Sattelanhängern nach den vorherigen Ansprüchen, **dadurch gekennzeichnet, dass** die freien Enden des U-förmigen Querabschnitts (14), (14') des Abstandsarms (11) über den Blattfederarm (3) hinausragen, wobei diese einen Querabschnitt (14") bilden, wobei ein Sicherheitsabstandshalter (24) intern zwischen beiden Enden angeordnet ist, der sich über dem Blattfederarm (3) und parallel zur Rolle (19) befindet, auf der sich der Blattfederarm (3) abstützt, befestigt mit herkömmlichen Mitteln durch die entsprechenden Bohrungen (22), die mit einem gummiartigen elastischen Material abgedeckt sind.

8. Ein Abstandsarm für die Anhebung einer Rollachse von Nutzfahrzeugen, Anhängern und Sattelanhängern nach irgendeinem der vorherigen Ansprüche, **dadurch gekennzeichnet, dass** die Befestigung zwischen der Stange (16) zur Aufnahme und Führung des Abstandhalters (7) und des Abstandsarms (11) mit einem beliebigen Befestigungsmittel wie Nieten oder Schweißen durchgeführt ist.

9. Ein Abstandsarm für die Anhebung einer Rollachse von Nutzfahrzeugen, Anhängern und Sattelanhängern nach irgendeinem der vorherigen Ansprüche, **dadurch gekennzeichnet, dass** in den Fällen, in denen der Träger (1) der Luftfederung nur an den Endbereichen (9) des Abstandshalter (7) in Verbindung mit demselben steht, wobei die Möglichkeit besteht, dass der Abstandshalter (7) entlang seiner gesamten Länge eine beliebige Ausführung haben kann, wie zum Beispiel viereckig, kreisförmig oder verschiedene Querschnitte, betrachtet wird, solange dieser auf dem Träger (1) der Luftfederung abgestützt ist und die Rotation des Abstandsarms (11) erlaubt.

10. Ein Abstandsarm für die Anhebung einer Rollachse von Nutzfahrzeugen, Anhängern und Sattelanhängern nach Anspruch 9, **dadurch gekennzeichnet, dass** in dem Fall, in dem der Abstandshalter (7) für jede Stützbedingung desselben auf dem Träger (1) eine viereckige Ausführung besitzt, egal, ob diese nur an den Endbereichen (9) oder über die gesamte Länge desselben erfolgt, wobei eine U-förmige Klappe (20) mit beliebigen Befestigungs-, Schraub- oder Schweißmitteln an dem Abstandshalter (7) auf jeder beliebigen Seite außer derjenigen angeordnet ist, die auf dem Träger (1) abgestützt ist, so dass an dem Ende des Abstandsarms (11) ein Ring konfiguriert wird, wobei dieser Ring eine Rotationsachse (21) besitzt, die innerhalb der U-förmigen Klappe (20) angeordnet ist, wodurch die Rotation des Abstandsarms (11) gegenüber dem Abstandshalter (7) ermöglicht wird.

## Revendications

1. Un bras d'écartement pour un élévateur d'un axe de roulement de véhicules industriels, remorques et semi-remorques, dont le but est d'être installé dans des dispositifs du type consistant en une paire de pièces latérales plates en L (4) montées sur le boulon d'assemblage articulé transversal (2) entre le support (1) de la suspension pneumatique et le bras à ressort à lames (3), fixant un soufflet (6), un caoutchouc ou une membrane actionnant le dispositif d'élévation sur la branche inférieure libre des pièces latérales (4), **caractérisé en ce qu'**il est constitué d'un bras d'écartement (11) possédant une section transversale en U (14) fixé au soufflé (6) par des guides (15) prévus à cet effet, des trous respectifs (22) étant disposés dans les côtés de la section transversale (14) pour le montage d'un rouleau apparent (19) sur lequel le bras à ressort à lames (3) repose, possédant dans la zone opposée, divisée par une ligne de pliage, une section longitudinale (12) avec des guides (13) pour la fixation à une barre (16) au moyen de trous (18) prévus dans cette dernière, qui possède une zone centrale de forme semi-cylindrique (17) pour le logement et le guidage d'un écarteur (7), qui possède une zone centrale de forme cylindrique (8) qui est logée dans la barre (16), et deux zones d'extrémité de forme quadrangulaire (9), de dimensions excédant celle de la zone centrale (8), qui reposent dans le support (1) de la suspension pneumatique, possédant des trous filetés associés (10) dans ses extrémités latérales pour sa fixation interne aux pièces latérales (4).

2. Un bras d'écartement pour un élévateur d'un axe de roulement de véhicules industriels, remorques et semi-remorques selon la revendication 1, **caractérisé en ce que** le bras d'écartement (11) possède des trous replaçant les guides (13) et (15).

3. Un bras d'écartement pour un élévateur d'un axe de roulement de véhicules industriels, remorques et semi-remorques selon n'importe laquelle des revendications précédentes, **caractérisé en ce que** l'angle de pliage entre la section longitudinale (12) et la section transversale (14) du bras d'écartement (11) a n'importe quelle valeur, même en ayant une configuration plate, qui est déterminée par la géométrie de l'assemblage du dispositif d'élévation.

4. Un bras d'écartement pour un élévateur d'un axe de roulement de véhicules industriels, remorques et semi-remorques selon n'importe laquelle des revendications précédentes, **caractérisé en ce que** le bras d'écartement (11) est matérialisé en deux pièces indépendantes, ayant une section longitudinale (12') fixée à une section transversale en U (14'), comme une fourche, les deux parties étant fixées par des moyens conventionnels, des vis par exemple, à la zone de fixation du soufflet (6), caoutchouc ou membrane.

5. Un bras d'écartement pour un élévateur d'un axe de roulement de véhicules industriels, remorques et semi-remorques selon n'importe laquelle des revendications 1 à 3, **caractérisé en ce que** le bras d'écartement (11) consiste en une section longitudinale (12") qui est fixée à la section transversale en U (14') dans la zone proche du rouleau (19), là sont disposées dans la zone d'extrémité pour la fixation de la section longitudinale (12") à la section transversale en U (14'), des pattes (25) comportant des trous (26) pour leur fixation, par des moyens conventionnels, à la section transversale (14') elle-même, la ligne de pliage de cette pièce étant proche desdites pattes (25).

6. Un bras d'écartement pour un élévateur d'un axe de roulement de véhicules industriels, remorques et semi-remorques selon les revendications précédentes, **caractérisé en ce que** la section longitudinale (12), (12'), (12") du bras d'écartement (11) consiste en un épaulement de renforcement de forme semi-cylindrique (23) dans la zone correspondant à la ligne de pliage, perpendiculairement à celle-ci, et s'étendant à la section transversale (14), (14').

7. Un bras d'écartement pour un élévateur d'un axe de roulement de véhicules industriels, remorques et semi-remorques selon les revendications précédentes, **caractérisé en ce que** les extrémités libres de la section transversale en U (14), (14') du bras d'écartement (11) s'étendent au-dessus du bras à ressort à lames (3), constituant une section transversale (14"), un écarteur de sécurité (24) étant disposé intérieurement entre les deux extrémités, situé au-dessus du bras à ressort à lames (3) et parallèlement au rouleau (19) sur lequel le bras à ressort à lames (3) repose, fixé par des moyens conventionnels à travers les trous correspondants (22), recouvert d'un matériau élastique de type caoutchouc.

8. Un bras d'écartement pour un élévateur d'un axe de roulement de véhicules industriels, remorques et semi-remorques selon n'importe laquelle des revendications précédentes, **caractérisé en ce que** la fixation entre la barre (16) pour loger et guider l'écarteur (7) et le bras d'écartement (11) se fait par tout moyen de fixation, comme des rivets ou une soudure.

9. Un bras d'écartement pour un élévateur d'un axe de roulement de véhicules industriels, remorques et semi-remorques selon n'importe laquelle des revendications précédentes, **caractérisé en ce que** dans les cas où le support (1) de la suspension pneumatique est en contact avec l'écarteur (7) uniquement dans les zones d'extrémité (9) de celui-ci, la possibilité pour l'écarteur (7) d'avoir n'importe quelle configuration sur toute sa longueur, telle que quadrangulaire, circulaire ou à section multiple, est envisagée, tant qu'il repose dans le support (1) de la suspension pneumatique et permet la rotation du bras d'écartement (11).

10. Un bras d'écartement pour un élévateur d'un axe de roulement de véhicules industriels, remorques et semi-remorques selon la revendication 9, **caractérisé en ce que** dans le cas où l'écarteur (7) a une configuration quadrangulaire, pour toute condition de support de celui-ci dans le support (1), qu'il soit uniquement dans les zones d'extrémité (9) ou sur toute la longueur de celui-ci, un rabat en U (20) est disposé dans l'écarteur (7) sur tout côté autre que celui reposant dans le support (1), par tout moyen de fixation, vissage ou soudure, de telle façon qu'un anneau est configuré sur l'extrémité du bras d'écartement (11), cet anneau contient un axe de rotation (21) disposé dans le rabat en U (20), permettant ainsi la rotation du bras d'écartement (11) par rapport à l'écarteur (7).
